# EUROPEAN PATENT APPLICATION

(11) **EP 3 685 920 A1**
(43) Date of publication of application: **29.07.2020**
(21) Application number: 19275044.6
(22) Date of filing: 04.04.2019
(51) Int. Cl.: B02C 2/00, B02C 2/04

(54) **BI-DIRECTIONAL CONE CRUSHER**

(30) Priority: 23.01.2019 US 201962796004 P
(71) Applicant: Mccloskey International, Ltd., Keen, Ontario K9J 0G6 (CA)
(72) Inventor: Eisner, Alan, Keen, Ontario K9J 0G6 (CA); Duellman, Dennis, Keen, Ontario K9J 0G6 (CA); Krol, Andrzej, Keen, Ontario K9J 0G6 (CA)
(74) Representative: Wilson Gunn

(57) **Abstract**

Embodiments disclosed herein provide a cone crusher (10) having a mantle (14) and a rotating eccentric (20) that causes the mantle to gyrate from side to side with respect to a stationary frame (24) to which is mounted a crusher lining (16). The cone crusher may include a thrust bearing (12) having a first bearing ring (30) rotating with the eccentric and a second bearing ring (32) mounted to the frame, the first and second bearing rings being disposed immediately adjacent and facing each other, one of the rings having a plurality of spaced oil feeds and a first (38) and a second (40) set of ramps on a surface facing the other ring. The first and second set of ramps extend upwardly from each of the oil feeds in opposite circumferential directions.

## Description

### Technical Field

Embodiments disclosed herein relate generally to cone crushers and more specifically to a bi-directional cone crusher having a flat ring-type thrust bearing.

### Background

Cone crushers are typically used to crush large rocks into smaller rocks at quarries. They include a conical crushing head which gyrates on a vertical axis using a rotating eccentric. A hardened mantle covers the crushing head to crush rocks between it and the hard liner of the crusher bowl. The eccentric is driven by a diesel engine or electric motor power drive. Cone crushers typically have the eccentric rotate in only one direction.

Given the severe operating conditions facing such crushers, the components need to be heavy and hardened to stand up to the forces generated during crushing operations. Some of the most important such components are the thrust bearings, as they absorb the downward forces generated during the crushing of rocks between the mantle and the crusher bowl lining.

Thrust bearings are typically disposed between the rotating eccentric and a stationary frame, and include a stationary bearing ring and a rotating bearing ring. These cone crushers are normally known as having ring-type or bushing-type thrust bearings. Each bearing ring is in the form of an annular ring. The wear surface of the rotatable bearing ring is configured for concentric sliding engagement with the wear surface of the stationary bearing ring. The stationary bearing ring is fixed to the stationary frame and the rotating bearing ring is mounted to the eccentric.

One of the bearing rings has a generally uninterrupted flat wear surface. The other bearing ring has a number of channels or oil feed ports leading from an inner edge, radially and circumferentially across the wear surface, providing lubrication and cooling to the wear surfaces of both bearing rings. The bearings can be made of the same metal, such as bronze or a bronze alloy, or steel, or they can be made of different materials such as one being a bronze alloy and the other being steel.

In addition to providing lubricating channels or grooves, the bearing ring having the oil feed ports includes evenly-spaced, slightly inclined ramps that lead from each oil feed port and provide a thin hydrodynamic oil film between the stationary and rotating bearing rings. This oil film supports the axial load and maintains the bearing rings spaced from each other. This way the thrust bearings and the oil film in effect carry the thrust loads of the crusher. Cone crushers having such bearings have been used for many years. They are disclosed, for example, in U.S. Pat. Nos. 5,602,945, 4, 586,664 and 9,605,711, and published patent application US2016/039440.

Some cone crushers are designed to be bi-directional, with the ability of the eccentric to rotate in either direction. Such cone crushers often have a longer life, and can be more convenient because there is no need to change the threaded upper bowl support, the bowl support locking ring or the thrust bearing rings when changing direction. The crusher bowl liner that provides the surface against which the mantle forces the rocks to be crushed may also last longer in bi-directional crushers because the problem of spiral channels forming in the liner is reduced. Such channels can in time permit out-of-spec rocks to pass through the crusher.

A drawback with existing bi-directional cone crushers is that they typically use roller bearings in place of the bearing rings described above. Roller bearings, whether in the form of flat roller or taper roller-type bearings, do not last as long under the substantial and irregular axial thrusts generated during rock crushing operations. Roller bearing systems are also initially more expensive than bearing rings. However, ring-type thrust bearings normally cannot be used with bi-directional cone crushers because their single-direction ramps would quickly run dry with a change in direction, causing overheating and damage and possible destruction of the crusher.

### Brief Description of the Figures

Embodiments will be readily understood by the following detailed description in conjunction with the accompanying drawings and the appended claims. Embodiments are illustrated by way of example and not by way of limitation in the figures of the accompanying drawings.
**Fig. 1** is a side elevation sectional view of a cone crusher incorporating the depicted embodiment of the thrust bearing;
**Fig. 2** is schematic, perspective depiction of an upper bearing ring shown to be rotating with the crusher eccentric, and a lower, stationary bearing ring, schematically showing the flow of oil out of the oil feed pockets and up one of the bearing ramps to the adjacent bearing flat;
**Fig. 3** is a schematic side elevation sectional view of the bearing rings of Fig. 2, with the inclination of the bearing ramps being exaggerated;
**Fig. 4** is a perspective view of the top of the upper bearing ring;
**Fig. 5** is a top plan view of the upper bearing ring of Fig. 4;
**Fig. 6** is a side elevation sectional view taken along line 6-6 of Fig. 5;
**Fig. 7** is a perspective view of the top of the lower bearing ring;
**Fig. 8** is a perspective view of the underside of the lower bearing ring;
**Fig. 9** is a top plan view of the lower bearing ring;
**Fig. 10** is a side elevation sectional view taken along line 10-10 of Fig. 9;
**Fig. 11** is a side elevation sectional view taken along line 11-11 of Fig. 9;
**Fig. 12** is a side elevation sectional view taken along line 12-12 of Fig. 9;
**Fig. 13** is a fragmentary side elevation sectional view of the cone crusher of Fig. 1, showing the position of the upper and lower bearing rings;
**Fig. 14** is an enlarged view of the depiction of Fig. 13, but taken in a section in which the oil feed pockets appear;
**Fig. 15** is a pictorial, partially broken-away side elevation view of the crusher, showing the path of lubricating oil being pumped into the crusher;
**Fig. 16** is a view corresponding to Fig. 15 except with less broken away - showing the oil distribution groove;
**Fig. 17** is a pictorial side elevation sectional view showing the path of lubricating oil as it is pumped up to the thrust bearing rings and as it begins to drain down;
**Fig. 18** is a schematic diagram of an alternative embodiment of the thrust bearing;
**Fig. 19** is a schematic diagram of a second alternative embodiment of the thrust bearing; and
**Fig. 20** is a schematic diagram of a third alternative embodiment of the thrust bearing.

### Detailed Description of Disclosed Embodiments

In the following detailed description, reference is made to the accompanying drawings which form a part hereof, and in which are shown by way of illustration embodiments that may be practiced. It is to be understood that other embodiments may be utilized and structural or logical changes may be made without departing from the scope. Therefore, the following detailed description is not to be taken in a limiting sense.

Various operations may be described as multiple discrete operations in turn, in a manner that may be helpful in understanding embodiments; however, the order of description should not be construed to imply that these operations are order-dependent.

The description may use perspective-based descriptions such as up/down, back/front, and top/bottom. Such descriptions are merely used to facilitate the discussion and are not intended to restrict the application of disclosed embodiments.

The terms "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still cooperate or interact with each other.

For the purposes of the description, a phrase in the form "A/B" or in the form "A and/or B" means (A), (B), or (A and B). For the purposes of the description, a phrase in the form "at least one of A, B, and C" means (A), (B), (C), (A and B), (A and C), (B and C), or (A, B and C). For the purposes of the description, a phrase in the form "(A)B" means (B) or (AB) that is, A is an optional element.

The description may use the terms "embodiment" or "embodiments," which may each refer to one or more of the same or different embodiments. Furthermore, the terms "comprising," "including," "having," and the like, as used with respect to embodiments, are synonymous, and are generally intended as "open" terms (e.g., the term "including" should be interpreted as "including but not limited to," the term "having" should be interpreted as "having at least," the term "includes" should be interpreted as "includes but is not limited to," etc.).

With respect to the use of any plural and/or singular terms herein, those having skill in the art can translate from the plural to the singular and/or from the singular to the plural as is appropriate to the context and/or application. The various singular/plural permutations may be expressly set forth herein for sake of clarity.

The disclosed embodiment provides bi-directional ramps that cause a hydrodynamic oil film to form regardless of the direction in which the eccentric is rotating. In a preferred embodiment, the upper thrust bearing ring is generally flat, and rotates with the eccentric. It is preferred that the upper ring be formed of a bronze alloy but it may alternatively be formed of steel or another hard material. The lower thrust bearing ring is typically stationary, and may include the bi-directional ramps. The lower ring is typically formed of steel but again may be a bronze alloy or another hard material.

The upper, rotating thrust bearing ring is typically feature-less and smooth other than and undercut portion for mounting fixtures such as bolts, screws or keys. It normally does not include its own source of lubricating oil. The lower, stationary ring, on the other hand, may include oil supply lines with flow metering orifices. In the depicted embodiment, the stationary ring is mounted to the frame of the crusher, although the term "mounted" can mean directly mounted to it or mounted to one or more other components that may be directly or indirectly mounted to the frame.

One of the orifices is disposed in each of a plurality of evenly spaced lubricating oil feed pockets in the ring. The orifices and the oil feed pockets will sometimes be collectively referred to as an "oil feed," which might take the form of a metering orifice or an orifice and an oil feed pocket as described herein. Lubricating oil is caused to overflow circumferentially from the oil feed pockets in the direction in which the upper bearing ring is rotating.

The overflowing oil flows in a thin hydrodynamic film up the ramps until it reaches a bearing flat adjacent the upper-most portion or upper extent of the ramps, where the oil is bled off. The flat may sometimes be described as an oil drain, which is meant to cover any means of draining oil from the upper extent of each of the first and second ramps and away from the bearing rings. In this fashion, the lubricating oil film absorbs the axial thrust forces and maintains the stationary and rotating bearing rings spaced apart. This not only minimizes friction, but also cools the thrust bearing surfaces.

While the term "ramp" is used to describe a feature of the bearing ring, it should be understood that the inclination of the ramp is very slight. It typically is approximately 0 degrees and 24 minutes although of course it may be more or less. A range of from 0 degrees and 14 to 34 minutes may work, depending upon the specific application.

If the direction of rotation of the eccentric is reversed, the oil flows up the opposite-facing ramps. In either case, only half of the ramps are utilized, which may increase the effective life of the ramps. Because the ramps are bearing the thrust forces, they can otherwise be some of the first surfaces in the crusher to wear out.

An advantage of the present disclosure is that, unlike the prior art, which requires changing out mechanical components like the ring-type thrust bearings, the threaded upper bowl support, or the bowl support locking ring, the direction of rotation of the cone crusher disclosed herein can be changed without replacing any of the mechanical components.

Embodiments disclosed herein may be said to provide a cone crusher having a mantle and a rotating eccentric that causes the mantle to gyrate from side to side with respect to a stationary frame to which is mounted a crusher lining. The cone crusher may comprise a thrust bearing including a first bearing ring rotating with the eccentric and a second bearing ring mounted to the frame, the first and second bearing rings being disposed immediately adjacent and facing each other. One of the rings may have a plurality of spaced oil feeds and a first and a second set of ramps on a surface facing the other ring, the first and second set of ramps extending upwardly from each of the oil feeds in opposite circumferential directions. The rotating bearing ring may be disposed above the stationary bearing ring, and the oil feeds and ramps may be disposed in the stationary bearing ring. However, the rotating bearing ring may also be disposed below the stationary bearing ring and the oil feeds and ramps may be disposed in either the stationary or the rotating bearing ring.

The embodiments also may be said to include a thrust bearing for a bi-directional cone crusher having an eccentric that rotates with respect to a stationary crusher frame. The thrust bearing may comprise a first bearing ring mounted to and rotating with the eccentric, and a second bearing ring mounted to the frame and disposed immediately adjacent to and facing the first bearing ring. The second bearing ring may include a plurality of spaced oil feeds, with first and second ramps extending slightly upwardly from each of the oil feeds in opposite circumferential directions. An oil drain may be disposed between the upper extent of each of the first and second ramps. The bearing may also include a bearing flat disposed adjacent the upper extent of each of the ramps, from which the oil drains.

Yet another way to describe the cone crusher of the present disclosure is as a cone crusher having a rotating eccentric and a ring-type thrust bearing in which the rotating eccentric can be rotated in either direction without changing the thrust bearing.

Another aspect of the disclosure is a process for lubricating a thrust bearing for a cone crusher having an eccentric that rotates with respect to a stationary frame. The process includes mounting a first thrust bearing ring to the eccentric to rotate with the eccentric, and mounting a second thrust bearing ring to the stationary frame such that it is substantially parallel to and in close proximity with the first thrust bearing ring. One of the thrust bearing rings may include a plurality of evenly-spaced lubricating oil feeds, and a plurality of ramps extending in each circumferential direction from the oil feeds.

The process may include the step of rotating the eccentric and the first thrust bearing ring in a first direction and directing lubricating oil from the oil feeds and up the ramps extending in a first circumferential direction. It may also include the step of reversing the direction of rotation of the eccentric and the first thrust bearing ring, and directing lubricating oil from the oil feeds and up the ramps extending in a second circumferential direction that is opposite from the first circumferential direction.

Another aspect of the disclosure is a cone crusher having a mantle and a rotating eccentric that causes the mantle to gyrate from side to side with respect to a stationary frame to which is mounted a crusher lining. This aspect includes a thrust bearing including an upper bearing ring rotating with the eccentric and a lower bearing ring mounted to the frame, the upper and lower bearing rings being disposed immediately adjacent and facing each other, the lower bearing ring having a plurality of spaced oil feeds and a first set and a second set of upwardly-facing support surfaces. The first set and second set of support surfaces extend in each circumferential direction from each oil feed to provide thrust support depending upon the direction in which the upper bearing ring is rotating. In this aspect of the disclosure, the support surfaces may or not be inclined in the form of a ramp. This aspect of the disclosure may also include an oil drain disposed adjacent the first and second support surfaces remote from the oil feeds.

Another way to describe the process is simply as a process for crushing rocks in a cone crusher having a rotating eccentric, a ring-type thrust bearing, and other mechanical components, including the steps of running the cone crusher with the eccentric rotating in a first direction, and, without changing the thrust bearing or other mechanical crusher components, running the cone crusher with the eccentric rotating in a second, opposite direction.

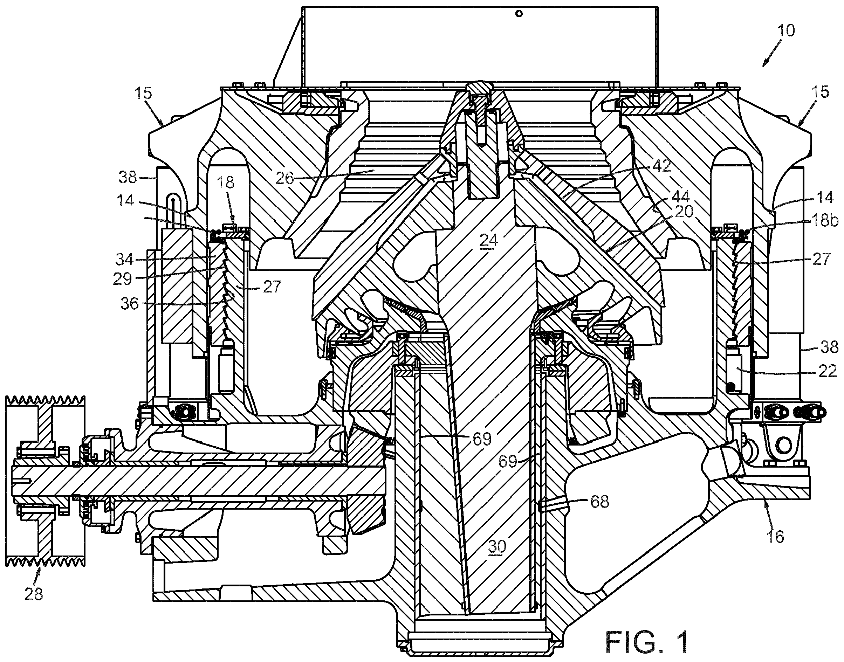

Fig. 1 shows a cone crusher 10 that includes the thrust bearing 12 that is the primary subject of this disclosure. Crusher 10 is largely conventional, with a gyrating mantle 14 and a stationary bowl liner 16. Mantle 14 is mounted to a main shaft 18 and gyrates through the action of an eccentric 20. A laterally-extending drive shaft 22 provides rotational power to eccentric 20. All of the foregoing components are mounted in a stationary crusher frame 24.

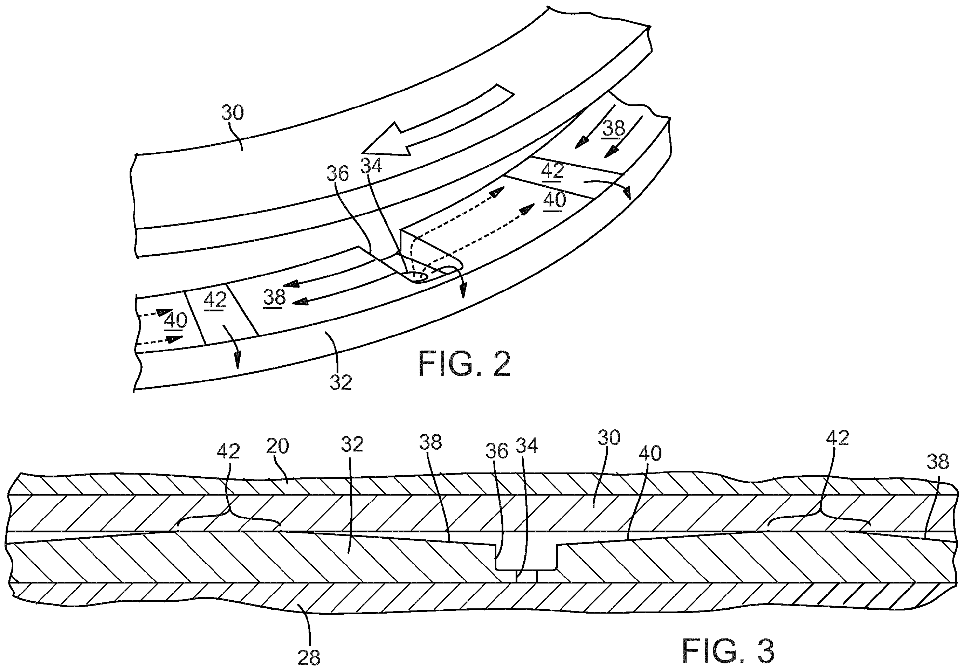

When rocks are fed into a crushing chamber 26, a crushing force acts on mantle 14, pushing the mantle downward and pressing main shaft 18 against a radial bearing 28. The downward force is supported by thrust bearing 12, and the radial force is supported by radial bearing 28. As described above, thrust bearing 12 may be comprised of two bearing rings, shown schematically in Figs. 2 and 3. One of the rings, here the upper ring 30, rotates with eccentric 20, while the other of the rings, here lower ring 32, is stationary and is mounted to frame 24. In certain applications the upper ring may be rotating and the lower ring may be stationary but that embodiment is not depicted.

In schematic Fig. 2, the upper and lower rings 30 and 32, respectively, are shown to be spaced apart but this is purely for illustrative purposes. Actually, the two rings are extremely close to each other, separated simply by a thin layer of lubricating oil. The two rings may thus be said to be parallel and substantially concentric with each other. As schematically shown in Fig. 2, oil is pumped through a plurality of evenly-spaced oil metering orifices 34 (only one of which shows in Fig. 2), and into one of a plurality of adjacent oil feed pockets 36 (again, only one of which shows in Fig. 2).

With upper bearing ring 30 rotating with the eccentric in a clockwise direction as shown in Fig. 2, the oil under pressure overflows oil feed pockets 36 of lower bearing ring 32 and travels in the direction of rotation of the upper bearing ring; that is, clockwise as depicted with solid, circumferentially-extending lines. If upper bearing ring 30 was rotating in a counter clockwise direction, the oil would circumferentially flow from oil feed pockets 36 in a counterclockwise direction as shown in broken circumferential lines.

As schematically depicted in Fig. 3, lower stationary ring 32 includes a plurality of evenly-spaced circumferentially-extending ramps. One set of ramps 38 extend in a clockwise direction from oil feed pockets 36, and another set of ramps 40 extend in a counterclockwise direction from the oil feed pockets. As noted above, the inclination of the ramps 38 and 40 is minimal - typically around 0 degrees 24 minutes. The rate of inclination depicted is exagerated in Fig. 3 for illustrative purposes.

Between ramps 38 and 40, again evenly-spaced around lower bearing ring 32, are a plurality of flats 42. As depicted, the thin layer of oil flows up a ramp 38 or 40, reaches a flat 42, and then flows radially outwardly to an oil drain system that will be described below. By providing a continuous layer of oil on ramps 38 or 40, the upper and lower bearing rings 30 and 32 are slightly spaced from each other but bear the downward thrusts created as rocks pass through crushing chamber 26 and are crushed between mantle 14 and bowl liner 16.

Bearing rings such as upper and lower rings 30 and 32 are often the components of a cone crusher that wear out first, as this is where some of the greatest forces are absorbed. With the depicted cone crusher 10 having the capability of rotating in either direction, only one set of ramps 38 or 40 will actively engage the underside of upper bearing ring 30 at any time. The other ramps 38 or 40 will be spaced from the underside of upper bearing ring 30 by a distance corresponding to the thickness of the layer of oil. Thus, lower, stationary bearing ring 32 and its ramps 38 and 40 may last longer than if both ramps were being engaged during all crushing operations.

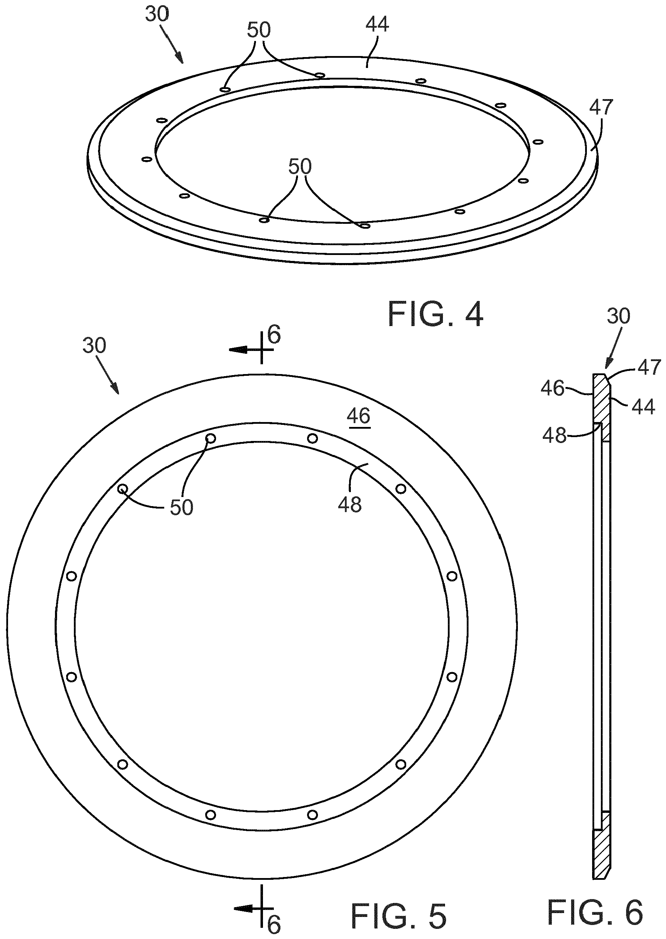

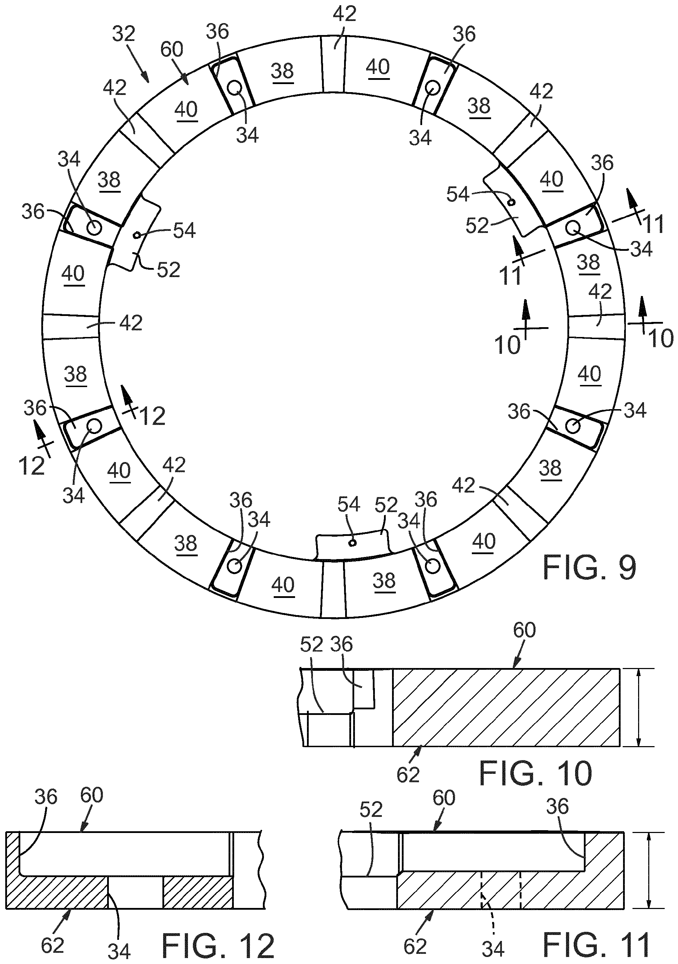

Bearing rings 30 and 32 are shown in more detail in Figs. 4-12. Specifically, Figs. 4-6 depict a preferred embodiment of upper bearing ring 30. It includes upwardly-facing and downwardly-facing surfaces 44 and 46, respectively. Both of faces 44 and 46 may be generally flat. A chamfer 47 may be provided on the upper edge of upper bearing ring 30 to accommodate for the shape of eccentric 20, if necessary. Downwardly-facing surface 46 may include an undercut portion 48 to facilitate its mounting to the eccentric, as will be explained below. A series of evenly spaced upper bearing ring mounting holes 50 are positioned around the inner periphery of upper bearing ring 30, typically in undercut portion 48.

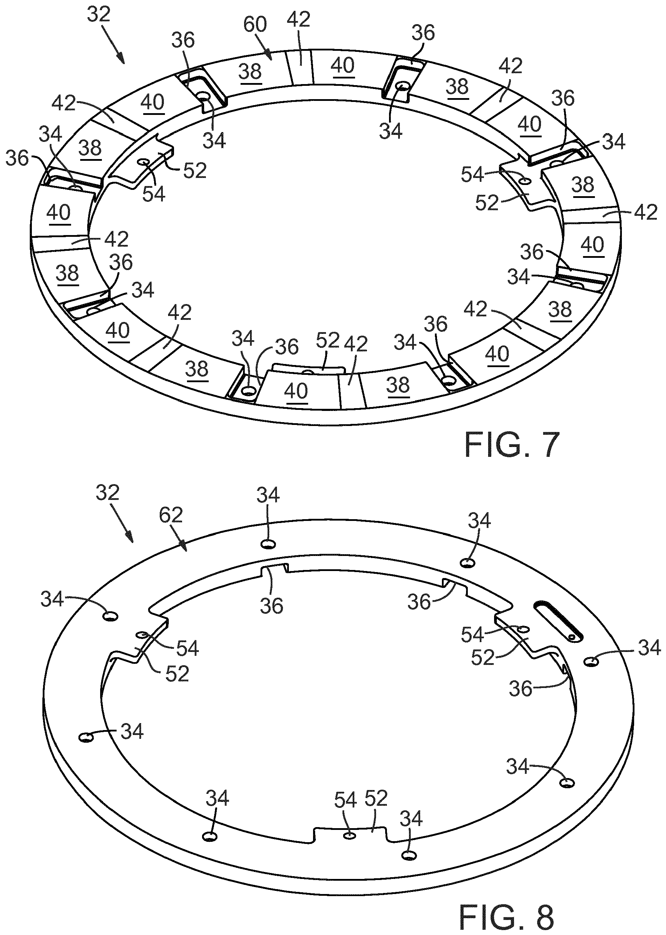

Figs. 7-12 depict a preferred embodiment of lower bearing ring 32. In a top surface 60, lower bearing ring 32 includes the previously-mentioned, evenly-spaced oil metering orifices 34, oil feed pockets 36, ramps 38 and 40 and flats 42. It also may include a plurality of mounting flanges 52 that are evenly-spaced around the inner circumference of lower bearing ring 32. Three mounting flanges 52 are included in the depicted embodiment and, with mounting holes 54, serve to facilitate lower bearing ring 32 being mounted to frame 24.

A bottom surface 62 of lower bearing ring 32 may also include a temperature sensing pocket 56 with a sensor mounting point 58 designed to receive a conductive line that leads to a temperature sensor (not shown). Because the temperature sensor is typically mounted to stationary bearing ring 32, it does not need to be accessed remotely by a wireless connection, such as by wi-fi, although that is certainly possible.

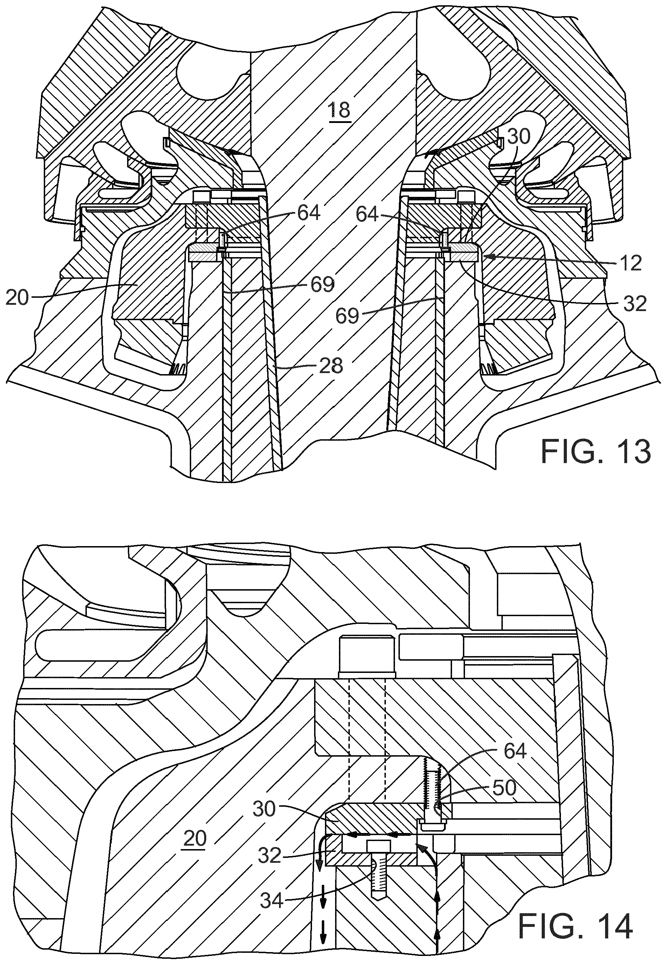

Figs. 13 and 14 depict, in section, the disposition of upper and lower bearing rings 30 and 32 within cone crusher 10. It can be seen that bolts 64 mount upper bearing ring 30 to eccentric 20 via mounting holes 50. Additional bolts (not shown) mount lower bearing ring 32 to frame 24 via flanges 52 and mounting holes 54. There are other ways the bearing rings may be mounted to the eccentric and to the frame but the described method has been found to be durable under the substantial forces and stresses associated with rock crushing operations.

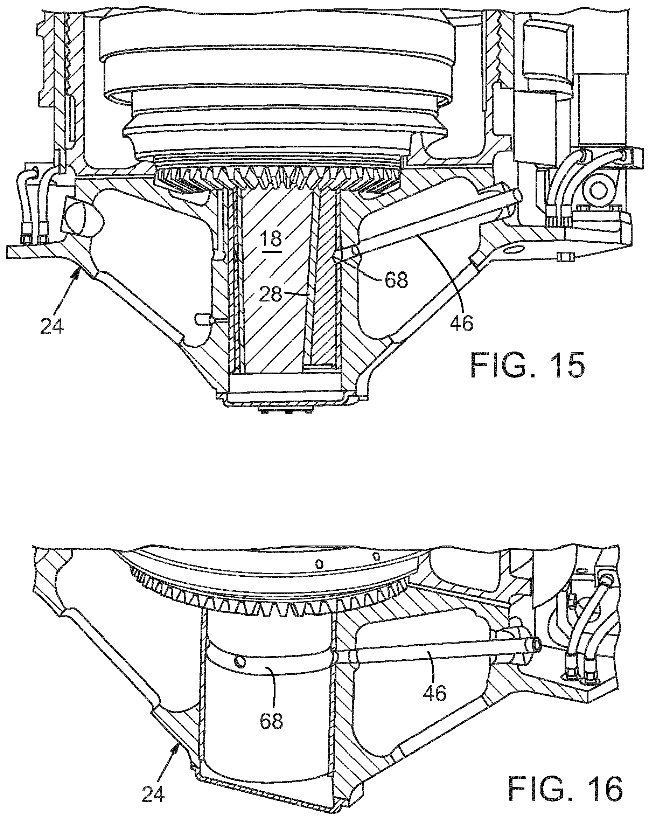

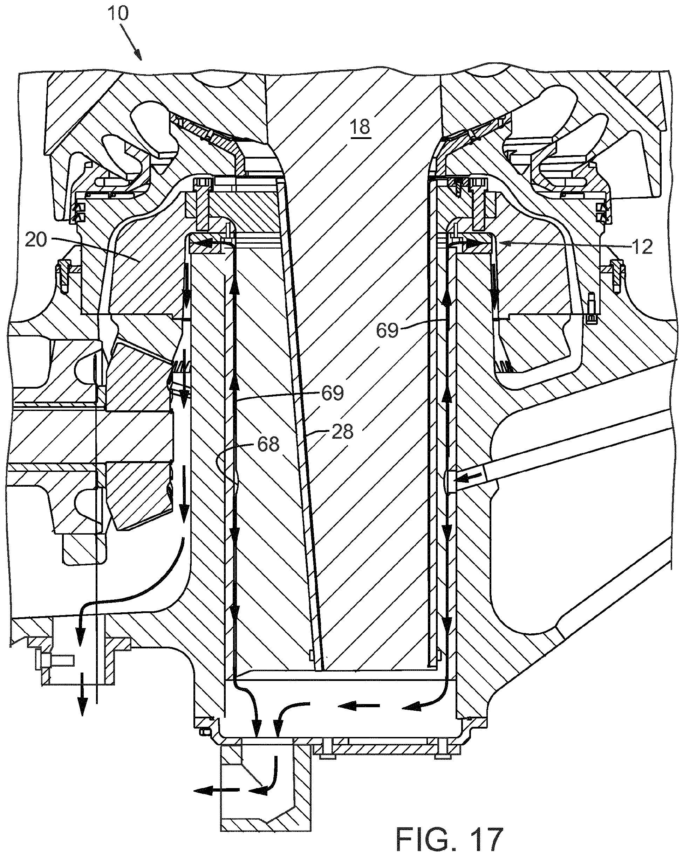

As mentioned above, lubricating oil is pumped under pressure to oil metering orifices 34 in lower bearing ring 32. The oil is pumped and routed as shown in Figs. 15 and 16, with oil being pumped into crusher 10 via an oil delivery pipe 66, routed through a circumferential groove 68 to an eccentric bearing 69 disposed outwardly of eccentric 20. The oil moves upwardly along eccentric bearing 69, providing lubrication to that bearing before arriving at lower bearing ring 32, as shown in Fig. 17. Oil then flows between the bearing rings as described above, lubricating and cooling the rings and ensuring the oil layer spacing between the rings. The oil then drains downwardly and eventually drains to an oil reservoir (not shown).

In the foregoing fashion, a thrust bearing is provided that ensures that the forces generated during crushing operations is absorbed in a manner that will minimize wear and maximize the life of the crusher, providing lubrication and cooling where it is most needed. While upper bearing ring 30 is shown to be rotating with eccentric 20, it may alternatively be stationarily mounted to frame 24, with lower bearing ring 32 being mounted to rotate with eccentric 20. Also, upper bearing ring 30 may be the ring that includes oil orifices, oil feed pockets, ramps 38 and 40 and flats 42.

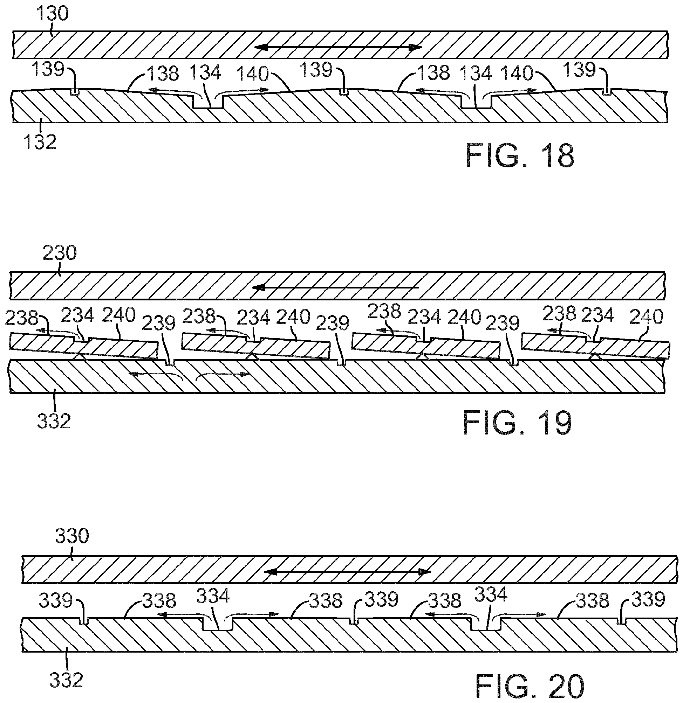

Several variations of the embodiment described above are provided in schematic figures 18-20. For example, Fig. 18 shows a thrust bearing for a cone crusher including an upper bearing ring 130 rotating with the eccentric and a lower bearing ring 132 mounted to the frame. The upper and lower bearing rings are disposed immediately adjacent and facing each other. The lower bearing ring 132 has a plurality of spaced oil feeds 134 that may be in the form of oil pockets, and a first set and a second set of upwardly-facing support surfaces 138 and 140 adjacent each of the oil feeds. Oil drains 139 may also be provided. The first set and second set of support surfaces 138 and 140 extend in each circumferential direction from each oil feed 134 to provide thrust support depending upon the direction in which the upper bearing ring 130 is rotating. Other aspects of this cone crusher may be the same as cone crusher 10.

Fig. 19 is a schematic drawing of a tilting mechanism that may be used, each of which includes support surfaces 238 and 240. An upper bearing ring 230 is mounted to and rotates with the eccentric. A tilting pad is mounted to a lower bearing ring 232 so that it tilts in a direction opposed to the direction of rotation of the upper bearing ring so the elevated support surface 238 is in the direction of rotation of upper bearing ring 230. The lower support surface 240 extends in a direction opposite to the direction of rotation of upper bearing ring 230. In the event the eccentric and the upper bearing ring are rotated in the opposite direction, the tilting pad will tilt in the opposite direction. Therefore, regardless of the direction of the upper bearing ring, the lower bearing ring will provide a ramp that slopes in the direction of rotation of the upper bearing ring. Oil feeds 234 that may be in the form of oil pockets are provided, as are oil drains 239. Other aspects of this cone crusher may be the same as cone crusher 10.

Fig. 20 depicts a thrust bearing for a cone crusher having a first bearing ring 330 mounted to and rotating with the eccentric, and a second bearing ring 332 stationarily mounted to the frame and disposed immediately adjacent to the first bearing ring. The second bearing ring includes a plurality of pairs of spaced oil feeds 334, with a support surface 338 extending between each pair of oil feeds. Oil drains 339 may also be provided. Oil from at least one of the pair of oil feeds 334 will spread onto the support surface to provide an oil layer that supports thrust created in the cone crusher. Other aspects of this cone crusher may be the same as cone crusher 10.

These and other variations of the disclosed embodiment may be possible within the scope of the present invention. It will be appreciated by those of ordinary skill in the art that a wide variety of alternate and/or equivalent embodiments or implementations calculated to achieve the same purposes may be substituted for the embodiments shown and described without departing from the scope. Those with skill in the art will readily appreciate that embodiments may be implemented in a very wide variety of ways. This application is intended to cover any adaptations or variations of the embodiments discussed herein. Therefore, it is manifestly intended that embodiments be limited only by the claims and the equivalents thereof.

## Claims

1. A cone crusher (10) having a mantle (14) and a rotating eccentric (20) that causes the mantle to gyrate from side to side with respect to a stationary frame (24) to which is mounted a crusher lining (16), comprising:
a thrust bearing (12) including a first bearing ring (30) rotating with the eccentric and a second bearing ring (32) mounted to the frame, the first and second bearing rings being disposed immediately adjacent and facing each other, one of the rings having a plurality of spaced oil feeds and a first (38) and a second (40) set of ramps on a surface facing the other ring, the first and second set of ramps extending upwardly from each of the oil feeds in opposite circumferential directions.

2. The cone crusher (10) of claim 1 wherein the spaced oil feeds comprise an oil metering orifice (34) and an oil pocket (36).

3. The cone crusher (10) of claim 1 or claim 2 wherein the rotating bearing ring (30) is disposed above the stationary bearing ring (32).

4. The cone crusher (10) of claim 3 wherein the oil feeds and ramps (38, 40) are disposed in the stationary bearing ring (32).

5. A thrust bearing (12) for a bi-directional cone crusher (10) having an eccentric (20) that rotates with respect to a stationary crusher frame (24), comprising:
a first bearing ring (30) mounted to and rotating with the eccentric;
a second bearing ring (32) mounted to the frame and disposed immediately adjacent to and facing the first bearing ring, the second bearing ring having a plurality of spaced oil feeds, with first (38) and second (40) ramps extending slightly upwardly from each of the oil feeds in opposite circumferential directions; and
an oil drain disposed between the upper extent of each of the first and second ramps.

6. The thrust bearing (12) of claim 5, further comprising a bearing flat (42) disposed adjacent the upper extent of each of the ramps (38, 40), from which the oil drains.

7. The thrust bearing (12) of claim 5 or claim 6, wherein the first bearing ring (30) is disposed above the second bearing ring (32).

8. A process for lubricating a thrust bearing (12) for a cone crusher (10) having an eccentric (20) that rotates with respect to a stationary frame (24), comprising:
mounting a first thrust bearing (30) ring to the eccentric to rotate with the eccentric; and
mounting a second thrust bearing ring (32) to the stationary frame such that it is substantially parallel to and in close proximity with the first thrust bearing ring, wherein one of the thrust bearing rings includes a plurality of evenly-spaced lubricating oil feeds, and a plurality of ramps (38, 40) extending in each circumferential direction from the oil feeds.

9. The process of claim 8, further comprising the step of rotating the eccentric (20) and the first thrust bearing ring (30) in a first direction; and
directing lubricating oil from the oil feeds and up the ramps (38) extending in the first direction.

10. The process of claim 9, further comprising the step of reversing the direction of rotation of the eccentric (20) and the first thrust bearing ring (30) to rotate in a second direction; and
directing lubricating oil from the oil feeds and up the ramps (40) extending in the second direction that is opposite from the first direction.

11. A cone crusher (10) having a mantle (14) and a rotating eccentric (20) that causes the mantle to gyrate from side to side with respect to a stationary frame (24) to which is mounted a crusher lining (16), comprising:
a thrust bearing (12) including an upper bearing ring (130) rotating with the eccentric and a lower bearing ring (132) mounted to the frame, the upper and lower bearing rings being disposed immediately adjacent and facing each other, the lower bearing ring having a plurality of spaced oil feeds (134) and a first set (138) and a second set (140) of upwardly-facing support surfaces, the first set and second set of support surfaces extending in each circumferential direction from each oil feed to provide thrust support depending upon the direction in which the upper bearing ring is rotating.

12. The cone crusher (10) of claim 11, further comprising an oil drain (139) disposed adjacent the first (138) and second (140) support surfaces remote from the oil feeds (134).

13. A process for lubricating a thrust bearing (12) for a cone crusher (10) having an eccentric (20) that rotates with respect to a stationary frame (24), comprising:
mounting a first thrust bearing ring (230) to the eccentric to rotate with the eccentric; and
mounting a second thrust bearing ring (232) to the stationary frame such that it is substantially parallel to and in close proximity with the first thrust bearing ring, wherein the second thrust bearing ring includes a plurality of tilting members designed to tilt away from a direction of travel of the first thrust bearing ring, forming a ramp inclined in the direction of travel of the first thrust bearing ring, and providing a plurality of spaced lubricating oil feeds (234) in the second thrust bearing ring.

14. The process of claim 13 wherein the step of providing a plurality of spaced oil feeds (234) comprises providing an oil feed to each side of each of the tilting members.
